(19) **Europäisches Patentamt / European Patent Office / Office européen des brevets**

(11) **EP 1 584 848 B1**

(12) **EUROPEAN PATENT SPECIFICATION**

(45) Date of publication and mention
of the grant of the patent:
**16.07.2008 Bulletin 2008/29**

(51) Int Cl.:
*F16H 61/28* (2006.01)     *F16D 23/06* (2006.01)
*F16H 63/30* (2006.01)

(21) Application number: **05075787.1**

(22) Date of filing: **05.04.2005**

(54) **Automatic shift operation controlling apparatus for a vehicle and method of detecting a balk point in the same**

Automatische Schaltsteuerungseinrichtung für ein Kraftfahrzeug und Methode zur Bestimmung des Synchronpunktes

Dispositif de contrôle de changement de vitesse automatique pour véhicule et méthode de detection de point de synchronisation

(84) Designated Contracting States:
**AT BE BG CH CY CZ DE DK EE ES FI FR GB GR HU IE IS IT LI LT LU MC NL PL PT RO SE SI SK TR**

(30) Priority: **05.04.2004 JP 2004111345**

(43) Date of publication of application:
**12.10.2005 Bulletin 2005/41**

(73) Proprietors:
• **AISIN AI Co., Ltd.**
**Nishio-shi,**
**Aichi-ken (JP)**
• **Toyota Jidosha Kabushiki Kaisha**
**Toyota-shi, Aichi 471-8571 (JP)**

(72) Inventors:
• **Tamori, Toshihiko**
**Nagoya-shi**
**Aichi-ken (JP)**
• **Miyazaki, Takeshige**
**Anjo-shi**
**Aichi-ken (JP)**

• **Kamiya, Mitsutoshi**
**Kariya-shi**
**Aichi-ken (JP)**
• **Kano, Tomoyuki**
**Toyota-shi**
**Aichi-ken (JP)**
• **Nakao, Michiaki**
**Toyota-shi**
**Aichi-ken (JP)**

(74) Representative: **Marshall, John Grahame**
**SERJEANTS**
**25 The Crescent**
**King Street**
**Leicester LE1 6RX (GB)**

(56) References cited:
**US-A- 6 070 117**

• **PATENT ABSTRACTS OF JAPAN vol. 014, no. 519 (M-1048), 14 November 1990 (1990-11-14) & JP 02 217629 A (MAZDA MOTOR CORP), 30 August 1990 (1990-08-30)**

**Description**

FIELD OF THE INVENTION

This invention generally relates to an automatic shift operation controlling apparatus for a vehicle and a method of detecting a balk point in an automatic shift operation controlling apparatus for a.vehicle.

BACKGROUND

JP2002-147590A (corresponding to EP1205691A1) discloses an apparatus for controlling an automatic shift operation for a vehicle, an apparatus which includes basic elements in a conventionally used manual transmission and automatically changes a shift stage in the manual transmission. This apparatus further includes a motor having a driving-power operating member, a synchronizer ring serving as a shift-operating member for switching a gear ratio in the transmission, and a driving-power transmitting mechanism positioned between the driving-power operating member of the motor and the synchronizer ring. When a shift operation takes place in the transmission, a driving power of the motor is transmitted to a sleeve, whereupon the synchronizer ring is operated in response to a movement of the sleeve. Accordingly, a rotation of the synchronizer ring is substantially synchronized with a rotation of the sleeve, and an automatic shift operation thereby achieved.

Compared with an apparatus for changing a shift stage in a transmission by a manual operation of a driver, the above-described apparatus, in which an automatic shift operation takes place, provides a much-improved level of convenience in a driving operation. With regard to the synchronizer ring in this apparatus, a plurality of synchronizer ring teeth is arranged in a circumferential direction of the synchronizer ring. With regard to the sleeve in this apparatus, a plurality of sleeve teeth (i.e., opposing teeth) is arranged in a circumferential direction of the sleeve. At the event of changing a gear ratio in the transmission, the plurality of sleeve teeth is meshed with the plurality of synchronizer ring teeth.

A shift-up side balk point appears when a shift-up operation takes place in the transmission, while a shift-down side balk point appears when a shift-down operation takes place in the transmission. A balk point determination method is known from US 6070117. As far as an automatic shift operation controlling apparatus applied in a transmission is concerned, requirements have been imposed for identifying a shift-up side balk point and a shift-down side balk point. Especially, in an automatic shift operation controlling apparatus applied in a transmission, automatic operations of mechanical components take place in the transmission in order to secure a gear ratio change in the transmission. In this regard and in contrast to manual transmissions, especially for this type of automatic shift operation controlling apparatus applied in a transmission, requirements have been imposed for identifying a shift-up side balk point and a shift-down side balk point. "A balk point" could in practical terms be regarded as the same for every individual vehicle in an identical model of vehicle. However, in order to achieve an enhanced level of high precision in determining a balk point, it should be recognized that, because of several factors including dimensional tolerance, a balk point can, and often does, vary from individual vehicle to individual vehicle even within the same category of model of vehicle.

In the light of the foregoing, at a time that vehicles are delivered from factories, by actually performing a shift operation for the purpose of shifting up in a transmission, a shift-up side balk point is determined in the case of every vehicle, while by actually performing a shift operation for the purpose of shifting down in a transmission, a shift-down side balk point is determined in the case of every vehicle. The shift-up side balk point and shift-down side balk point thus determined are then stored in, for example, a memory of an automatic shift operation controlling apparatus applied in a transmission.

However, as far as the above-described conventional method of determining the shift-up side balk point and the shift-down side balk point is concerned, actual shift operations are necessary for both shifting up and shifting down in the case of each of plural shift stages, plural shift stages which are, in general, designed into a transmission. In these circumstances, an unnecessary operation time would be taken merely on determining the shift-up side balk point and the shift-down side balk point,

The present invention has been made in view of the above circumstances, and provides an apparatus for controlling an automatic shift operation in a transmission for a vehicle, an apparatus which is capable of curtailing to an abbreviated period the time required for determining both of an shift-up side balk point and a shift-down side balk point, and provides also a method of detecting a balk point in the apparatus for controlling an automatic shift operation in a transmission for a vehicle.

SUMMARY OF THE INVENTION

According to an aspect of the present invention, an automatic shift operation controlling apparatus for a vehicle includes a synchronizer ring having plural synchronizer ring teeth formed on an outer surface of the synchronizer ring and arranged in a circumferential direction of the synchronizer ring, and an opposing member having plural opposing teeth formed on an inner surface of the opposing member and arranged in a circumferential direction of the opposing member, the plural opposing teeth engageable with the plural synchronizer ring teeth at a time of a change in a gear ratio in a transmission. A shift-up side balk point appears at a time of a shift-up operation, and a different shift-down side balk point appears at a time of a shift-down operation. The apparatus is characterized in comprising: a first processing unit configured to determine in actual practice a first balk point, which is one of the shift-up side balk point and the shift-down side balk point, by implementing one of the shift-up operation and the shift-down operation; and a second processing unit configured to anticipate, on a basis of the first balk point, a predicted value of a second balk point which is the other one of the shift-up side balk point and the shift-down side balk point,

Further, each of the plural synchronizer ring teeth can include a first synchronizing chamber surface and a second synchronizing chamfer surface which face one another back to back, and each of the plural opposing member teeth includes a first opposing chamfer surface and a second opposing chamfer surface which face one another back to back. The chamfer surface can be a chamfered inclined surface.

Still further, an angle defined between the first synchronizing chamfer surface and a central line of each of the plural synchronizer ring teeth is denoted by $\alpha 1$, an angle defined between the second synchronizing chamfer surface and the central line of the each of the plural synchronizer ring teeth is denoted by $\alpha 2$, an angle defined between the first opposing chamfer surface and a central line of each of the plural sleeve teeth is denoted by $\alpha 3$, and an angle defined between the second opposing chamfer surface and the central line of the each of the plural sleeve teeth is denoted by $\alpha 4$. In such a case, at least one of a first condition, in which $\alpha 1 \neq \alpha 2$ is effected, and a second condition, in which $\alpha 3 \neq \alpha 4$ is effected; should be satisfied. Formula $\alpha 1 \neq \alpha 2$ substantially corresponds to $\alpha 1/\alpha 2 \neq 1.0$. This principle is applied to formula. $\alpha 3 \neq \alpha 4$.

BRIEF DESCRIPTION OF THE DRAWINGS

The foregoing and additional features and characteristics of the present invention will become more apparent from the following detailed description considered with reference to the accompanying drawings, wherein;

Fig. 1 is a block view schematically illustrating an apparatus for controlling an automatic shift operation in a transmission according to an embodiment of the present invention;

Fig. 2 is a conceptual diagram illustrating an automatically shifting mechanism according to the embodiment of the present invention;

Figs. 3A, 3B and 3C are diagrams illustrating an operation of a sleeve and a synchronizer ring according to the embodiment of the present invention;

Fig. 4 is an expansive view illustrating relevant portions of synchronizer ring teeth of the synchronizer ring and sleeve teeth of the sleeve according to the embodiment of the present invention; and

Fig. 5 is a diagram for explaining variations of a shift stroke, a select stroke and a rotational speed of an input shaft according to the embodiment of the present invention.

DETAILED DESCRIPTION

An embodiment of the present invention will be described in detail below with reference to the accompanying drawings. An apparatus for controlling an automatic shift operation in a transmission for a vehicle is provided for a manual transmission in which a shift stage can be switched in response to a manual operation of a shift lever by a driver.

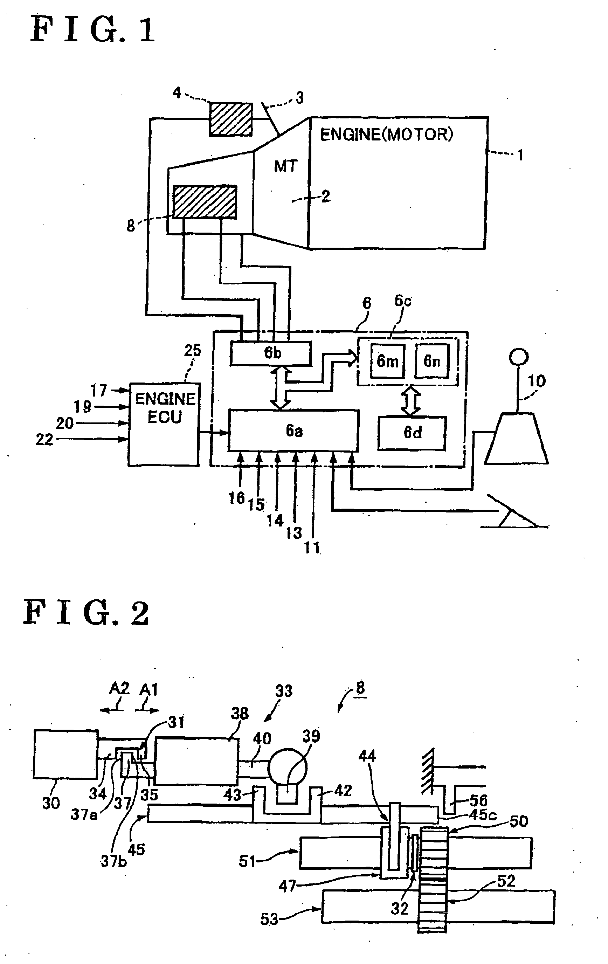

Referring initially to Fig. 1, the apparatus for controlling an automatic shift operation in a transmission for a vehicle according to the embodiment of the present invention includes a vehicle driving-power source 1 for activating a vehicle to drive; a transmission 2 for transmitting a driving power from the driving-power source 1 to wheels of the vehicle, a driving power of a level adequate for a shift stage selected in the transmission 2; a clutch 3 to be engaged, or, as appropriate, disengaged, for transmitting, or, as appropriate, interrupting, the driving power from the driving-power source 1 to the transmission 2; a clutch actuator 4 for operating the clutch 3, an ECU 6; and an automatically shifting mechanism 8. The vehicle-driving power source 1 according to the embodiment of the present invention is an internal combustion engine. However, the vehicle-driving power source 1 is not limited to such an engine, and a motor can also be applied.

The apparatus for controlling an automatic shift operation in a transmission for a vehicle according to the embodiment further includes a shift sensor 11 for detecting a shift range over which a shift lever 10 should be positioned in accordance with an intention of a driver to shift; a select stroke sensor 13 for detecting a select-directional stroke position of the automatically shifting mechanism 8; a shift stroke sensor 14 for detecting a shift-directional stroke position of the automatically shifting mechanism 8; a steering switch 15 equipped at a driver's seat and manually operated by a driver who requires a gear ratio change in the transmission 2; a clutch sensor 16 for detecting a degree of engagement, or disengagement, of the clutch 3, or of a load applied to the clutch 3; a vehicle speed sensor 17 for detecting a vehicle speed; an acceleration opening degree sensor 19 for detecting a degree of an acceleration opening of an acceleration element such as an accelerator pedal, an acceleration element which is operated manually by a driver; a throttle opening degree sensor 20 for detecting a degree of opening of a throttle valve; and an engine rotational speed sensor 22 for detecting a rotational speed of the engine (i.e., the vehicle driving-power source 1), i.e., for detecting a rotational speed of a crankshaft.

When a motor is applied, instead of the engine, as the vehicle driving-power source 1, a motor rotational speed sensor for detecting a rotational speed of the motor can be substituted for the engine rotational speed sensor 22. Further, although a clutch pedal does not necessarily have to be mounted at the vehicle, if needed, a clutch pedal can be mounted at a driver's seat.

As illustrated in Fig. 1, signals transmitted from the shift sensor 11, the select stroke sensor 13, the shift stroke sensor 14, the steering switch 15 and the clutch sensor 16 are respectively input to the ECU 6. Signals transmitted from the vehicle speed sensor 17, the acceleration opening degree sensor 19, the throttle opening degree sensor 20 and the engine rotational speed sensor 22 are input into an Engine-ECU 25, respectively, and then transmitted to the ECU 6. The ECU 6 accordingly outputs control signals to the automatically shifting mechanism 8 on the basis of these input signals and operates either both the automatically shifting mechanism 8 and the clutch actuator 4, or just the automatically shifting mechanism 8. Thus, a fully automatic system or an automatic shift system can be secured.

As further illustrated in Fig. 1, the ECU 6 incorporates an input processing circuit 6a, an output processing circuit 6b, a central processing unit (abbreviated to "CPU" hereinafter) 6c and a memory storage 6d. The CPU 6c functions as a first processing unit 6m for implementing a first process and a second processing unit 6n for implementing a second process.

Next, described below, with reference to Fig. 2, is the automatically shifting mechanism 8.

The automatically shifting mechanism 8 has a structure built up with a driving-power source 30 equipped with a driving-power operating member 31, a synchronizer ring 32 operated for changing a gear ratio in the transmission 2, i.e., operated for changing a shift stage in the transmission 2; and a driving-power transmitting mechanism 33 positioned between the driving-power operating member 31 and the synchronizer ring 32.

As the driving-power source 30 according to the embodiment of the present invention, a device such as a motor or a hydraulically driven-type device (e.g., an oil pressure device) can be applied. The driving-power operating member 31 of the driving-power source 30 is movable, both in a forward direction denoted by an arrow A1, and in a rearward direction denoted by an arrow A2. The driving-power operating member 31 is arm-shaped and is integrally provided with a first contact portion 34 and a second contact portion 35, contact portions positioned opposite one another and having a spacing therebetween. The first contact portion 34 is operated when the driving-power source 30 is activated for a forward operation, while the second contact portion 35 is operated when the driving-power source 30 is activated for a rearward operation.

The driving-power transmitting mechanism 33, as illustrated in Fig. 2, has a structure built up with a movable member 40, a fork shaft 45 and a sleeve 47. The movable member 40 includes a first engagement member 37, a speed reduction mechanism 38 and a second engagement member 39. The first engagement member 37 can be engaged with the driving-power operating member 31 of the driving-power source 30. The fork shaft 45 includes both a third engagement member 42, and a fourth engagement member 43, each of which is engageable with the second engagement member 39 of the movable member 40, and a fork 44. The sleeve 47 is engaged with the fork 44 of the fork shaft 45 and operates the synchronizer ring 32. The sleeve 47 moves the synchronizer ring 32 in a direction of a shift stage to be selected, a movement of the sleeve 47 which results in a shift operation in the transmission 2. The first engagement member 37 of the movable member 40 is arranged between the first contact portion 34 and the second contact portion 35 of the driving-power operating member 31. In the above description, the shift fork shaft 45, the fork 44, the sleeve 47 and the synchronizer ring 32 have all been described in the singular in order to simplify the description. However, each of these components can be described in a multiple quantity.

Moreover, as illustrated in Fig. 2, the transmission 2 includes an input shaft 51 with a first gear 50 mounted thereon, and an output shaft 53 with a second gear 52 mounted thereon. The input shaft 51 is arranged substantially in parallel to the output shaft 53.

When the driving-power source 30 is activated, or rotated, in one direction, the driving-power operating member 31 moves in a forward direction, i.e., in the direction of arrow A1. In this case, the first contact portion 34 of the driving-power operating member 31 impacts on an engagement surface 37a of the first engagement portion 37, and further the driving-power operating member 31 moves the first engagement portion 37 to the extent of a predetermined stroke in the direction of arrow A1, thus maintaining the state of impact. The movement of the first engagement member 37 in the direction of arrow A1 can be decelerated by the speed reduction mechanism 38. Following the movement of the first engagement member 37 in the direction of arrow A1, the second engagement member 39 moves in the direction of arrow A1 and then impacts the third engagement portion 42. Following the impact of the second engagement member 39 with the third engagement portion 42, the fork shaft 45 moves, along with the fork 44, in the direction of arrow A1. The sleeve 47, engaged with the fork 44, then moves in the same direction, whereupon the synchronizer ring 32 moves for the purpose of selecting a shift stage in the transmission 2.

When a shift stage has been selected in the transmission 2 as described above, a driving force transmitted from the vehicle driving-power source 1 to the input shaft 51 is further transmitted to the output shaft 53 via the first and second gears 50 and 52. The output shaft 53 then starts rotating about an axis thereof. The driving force is then transmitted to the wheels of a vehicle from the rotating output shaft 53, whereupon the vehicle starts moving.

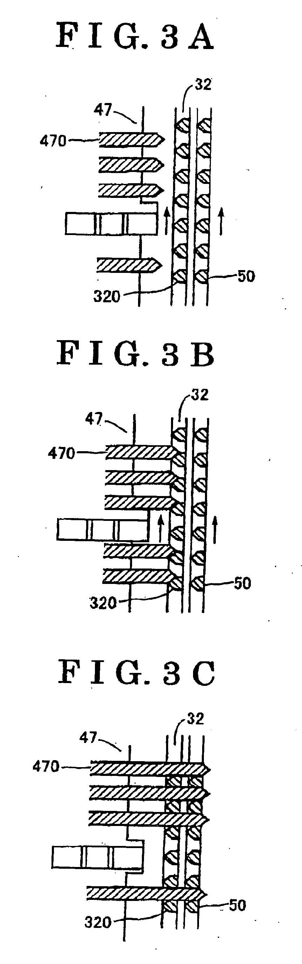

Next, a general concept of a mesh-engagement of the synchronizer ring 32 will be described below with reference to Figs. 3A, 3B and 3C. The synchronizer ring 32 is integrally provided with plural synchronizer ring teeth 320 formed on an outer surface of the synchronizer ring 32 and arranged in a circumferential direction thereof. The plural synchronizer ring teeth 320 are formed with a certain distance interposed between each of the adjacent teeth 320. The sleeve 47, i.e., an opposing member, is integrally provided with plural sleeve teeth 470, i.e., opposing teeth, formed on an inner surface of the sleeve 47 and arranged in a circumferential direction thereof. The plural sleeve teeth 470 are formed with a certain distance interposed between each of the adjacent teeth 470. The sleeve 47 serves as the opposing member of the synchronizer ring 32.

When the sleeve 47 is operated to move in a direction for shifting, the sleeve 47 moves or advances in an axial direction thereof. The synchronizer ring 32, pushed by the sleeve 47, frictionally contacts with a cone surface of the first gear 50, whereupon the first gear 50 starts rotating in response to the frictional contact with the synchronizer ring 32. When the sleeve 47 then moves or advances further in the direction for shifting, as illustrated in Fig. 3B, the sleeve teeth 470 of the sleeve 47 are brought into engagement with the synchronizer ring teeth 320 of the synchronizer ring 32, whereupon the synchronizer ring 32 prevents the sleeve 47 from moving further toward the synchronizer ring 32. In this way, the sleeve 47 pushes the synchronizer ring 32, resulting in rotational speeds of the sleeve 47 and the first gear 50 becoming the same, and thus ensuring synchronization.

After the synchronization has been achieved, the sleeve 47 moves further toward the synchronizer ring 32. As illustrated in Fig. 3C, the sleeve teeth 470 of the sleeve 47 pass through the synchronizer ring teeth 320 of the synchronizer ring 32, and the sleeve teeth 470 are brought into engagement with teeth of the first gear 50, whereupon a shift operation is completed.

In the above described apparatus according to the embodiment of the present invention, a shift-up side balk point appears when a shift-up operation is performed, e.g., when a first shift stage is shifted up to a second shift stage, while a shift-down side balk point appears when a shift-down operation is performed, e.g., when the second shift stage is shifted down to the first shift stage.

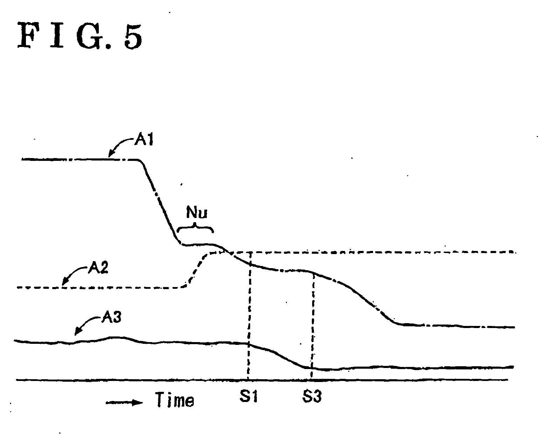

Fig. 5 represents variations of a shift stoke, a select stroke and a rotational speed of the input shaft 51, each of which is represented in the diagram by the vertical axis, over a period of time elapsed, represented by the horizontal axis. A characteristic line A1 in Fig. 5 represents the shift stroke, i.e., a stroke of the sleeve 47 moving from a reference position, at the time of a shift-up operation. A characteristic line A2 represents the select stroke, and a characteristic line A3 represents the rotational speed of the input shaft 51. As is evident from the characteristic line A1, the shift stroke varies as the shift operation proceeds. A Nu range illustrated by the characteristic line A1, in which the shift stroke does not substantially change, corresponds to a neutral range.

As illustrated by the characteristic line A1, synchronization commences at a time S1 and terminates at a time S3. Namely, synchronization is secured by the sleeve 47 and the synchronizer ring 32 during a period of time defined between the times S1 and S3. At the time S1, as illustrated by the characteristic line A3, the rotational speed of the input shaft 51 varies to a degree which is adequate for the next shift stage to be selected. Therefore, "a balk point" is defined as a shift stroke, i.e., a position of the sleeve 47, at a time when the rotational speed of the input shaft 51 influenced by an external force of other elements varies toward a target rotational speed.

When the shift stroke of the sleeve 47 reaches a balk point during a shift operation, the rotational speed of the input shaft 51 is synchronized with that of the output shaft 53, and as a result shock may occur in response to actions of a vehicle. Moreover, if, prior to termination of synchronization, the shift stroke of the sleeve 47 progresses excessively, abnormal noise may occur as a result of clashing of gears. In order to inhibit such occurrences, the ECU 6 employs a balk point at the time of shifting.

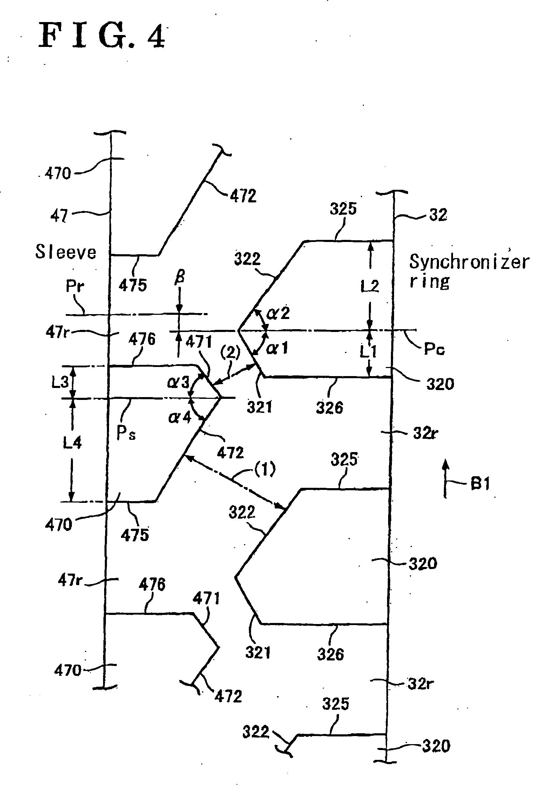

As illustrated in Fig. 4, each of the plural synchronizer ring teeth 320 has a short synchronizer ring chamfer surface 321, i.e., a first synchronizing chamfer surface (a short one, hereinafter referred to as a short synchronizing chamfer surface) and a long synchronizer ring chamfer surface 322, i.e., a second synchronizing chamfer surface (a long one, hereinafter referred to as a long synchronizing chamfer surface), two chamfer surfaces which face one another back to back. Each of the plural synchronizer ring teeth 320 also has a short synchronizer ring side surface 325 (hereinafter referred to as a short synchronizing side surface) and a long synchronizer ring side surface 326 (hereinafter referred to as a short synchronizing side surface), two side surfaces which face one another back to back. Both the synchronizing surfaces 325 and 326 are defined along a central line Pc. The long synchronizing side surface 326 is adjacent to the short synchronizing chamfer surface 321, while the short synchronizing side surface 325 is adjacent to the long synchronizing chamfer surface 322. A spacing 32r is defined between each of the adjacent synchronizer ring teeth 320.

As further illustrated in Fig. 4, each of the plural sleeve teeth 470 (i.e., opposing teeth) of the sleeve 47 (i.e., opposing member) has a short sleeve chamfer surface 471, i.e., a first opposing chamfer surface (a short one) and a long sleeve chamfer surface 472, i.e., a second opposing chamfer surface (a long one), two chamfer surfaces which face one another back to back. Each of the plural sleeve teeth 470 of the sleeve 47 also has a long sleeve side surface 476 and a short sleeve side surface 475, two side surfaces which face one another back to back. Both of the sleeve side surfaces 475 and 476 are defined along a central line Ps. The long sleeve side surface 476 is adjacent to the short sleeve chamfer surface 471, while the short sleeve side surface 475 is adjacent to the long sleeve chamfer surface 472. A spacing 47r is defined between each of the adjacent sleeve teeth 470.

As still further illustrated in Fig. 4, a tip angle defined between the central line Pc of each of the synchronizer ring teeth 320 and the short synchronizing chamfer surface 321 is denoted by $\alpha 1$, while a tip angle defined between the central line Pc and the long synchronizing chamfer surface 322 is denoted by $\alpha 2$. A distance defined between the central line Pc and the long synchronizing side surface 326 is denoted by L1, while a distance defined between the central line Pc and the short synchronizing side surface 325 is denoted by L2. A tip angle defined between the central line Ps of each of the sleeve teeth 470 and the short sleeve chamfer surface 471 is denoted by $\alpha 3$, while a tip angle defined between the central line Ps and the long sleeve chamfer surface 472 is denoted by $\alpha 4$. A distance defined between the central line Ps and the long sleeve side surface 476 is denoted by L3, while a distance defined between the central line Ps and the short sleeve side surface 475 is denoted by L4. Moreover, in terms of the sleeve 47, a central line Pr is defined at a substantially intermediate point in the spacing 47r between the two adjacent sleeve teeth 470. A distance $\beta$ is defined between the central line Pr and the central line Pc of each of the synchronizer ring teeth 320. The distance $\beta$ functions as a parameter for determining a relative rotational position between the synchronizer ring 32 and the sleeve 47. Hereinafter, the values denoted by $\alpha 1$, $\alpha 2$, $\alpha 3$, $\alpha 4$, L1, L2 and $\beta$ are defined in an expanded view in Fig. 4, and the central lines Ps and Pc are also defined in the expanded view in Fig. 4.

Assuming that the synchronizer ring 32 rotates in a direction of arrow B1 in Fig. 4, when, during a time of synchronization, the synchronizer ring 32 rotates at a faster rate than that of the sleeve 47, the synchronizer ring teeth 320 approaches the sleeve teeth 470. In this case, the synchronizer ring teeth 320 come into contact with the sleeve teeth 470 via a surface denoted by (1) in Fig. 4. At the surface denoted by (1), the long synchronizing chamber surfaces 322 of the synchronizer ring teeth 320 come into contact with the long sleeve chamfer surfaces 472 of the sleeve teeth 470.

On the other hand and on the same assumption, when, during a time of synchronization, the sleeve 47 rotates at a faster rate than that of the synchronizer ring 32, the sleeve teeth 470 approaches the synchronizer ring teeth 320. In this case, the sleeve teeth 470 come into contact with the synchronizer ring teeth 320 via a surface denoted by (2) in Fig. 4. At the surface denoted with (2), the short sleeve chamfer surfaces 471 of the sleeve teeth 470 come into contact with the short synchronizing chamfer surfaces 321 of the synchronizer ring teeth 320.

As described above, in consequence of the difference between the relative rotational speeds of the synchronizer ring 32 and the sleeve 47, in the event of up-shifting, synchronization may be initiated at either the surface denoted by (1) and that denoted by (2), and likewise in a case of down-shifting, synchronization may be initiated at either of the two surfaces denoted by (1) and (2). In other words, a balk point tends to vary in accordance with relative rotational speeds, regardless of whether up-shifting or down-shifting is being performed.

In the light of the foregoing, according to the embodiment of the present invention, with reference to a design value based upon dimensions of the automatic shift operation controlling apparatus for a vehicle, a set value C1 appropriate to a shift-up side balk point is predetermined, while a set value C2 appropriate to a shift-down side balk point is also predetermined. Both of these set values C1 and C2 can be stored in the memory storage 6d of the ECU 6, but can also be stored at a different portion. Each of the set values C1 and C2 is only calculated on the basis of a design value and can be applied as a parameter for determining an actual balk point. In other words, each of the set values C1 and C2 does not always correspond to an actual balk point. Hereinafter, the following relation can be established: C1-C2=C3.

The set values C1, C2 and by extension C3 ate predetermined on the basis of the values denoted by $\alpha 1$, $\alpha 2$, $\alpha 3$, $\alpha 4$, L1, L2 and $\beta$. Experience has shown that differences in the respective set values C1, C2 and C3 among individual vehicles of an identical vehicle model are not substantial. In such an event, at least one of the following conditions should be satisfied: a first condition in which a formula: $\alpha 1 \neq \alpha 2$ is effected, and a second condition in which a fornmla: $\alpha 3 \neq \alpha 4$ is effected.

According to the embodiment of the present invention, a balk point can be obtained in accordance with the following methods 1 and 2, as non-limiting examples.

**Method 1**

The first processing unit 6m of the ECU 6 implements a process in which a shift-up side balk point D1, which appears in response to an actual shift-up operation (e.g., from a first shift stage to a second shift stage), is actually obtained. The second processing unit 6n of the ECU 6 then implements a process in which a shift-down side balk point D2' is determined as a predicted value without the need for an actual shift-down operation for the purpose of obtaining the shift-down side balk point. In detail, in this process, the shift-down side balk point D2' is determined in accordance with one of the following formulae 1 and 2 on the basis of the shift-up side balk point D1. The predicted value should be denoted with a mark ['].

$$D2' = D1 - C3 \quad \text{(Formula 1)},$$

$$D2' = D1 + C3 \quad \text{(Formula 2)}$$

The shift-down side balk point D2' is obtained by formula 1 when the shift operation proceeds in a positive direction within a simulated coordinate system, while it is obtained by formula 2 when the shift operation proceeds in a negative direction on a simulated coordinate system.

**Method 2**

The first processing unit 6m of the ECU 6 implements a process in which a shift-down balk point D2, which appears in response to an actual shift-down operation (e.g., from the second shift stage to the first shift stage), is actually obtained. The second processing unit 6n of the ECU 6 then implements a process in which a shift-up side balk point D1' is determined as a predicted value, without the need for an actual shift-up operation for the purpose of obtaining the shift-up side balk point. In detail, in this process, the shift-up side balk point D1' is determined in accordance with one of the following formulae 3 and 4 on the basis of the shift-down side balk point D2.

$$D1' = D2 - C3 \quad \text{(Formula 3),}$$

$$D1' = D2 + C3 \quad \text{(Formula 4)}$$

The shift-up side balk point D1' is obtained by formula 3 when the shift operation proceeds in a negative direction within a simulated coordinate system, while it is obtained by formula 4 when the shift operation proceeds in a positive direction on a simulated coordinate system.

As described above, according to the embodiment of the present invention, a first balk point, one of the shift-up side balk point and the shift-down side balk point, is initially obtained by actually performing one of a shift-up operation and a shift-down operation, and a second balk point, the other one thereof, is then determined by use of the set values C1, C2 and C3, on the basis of the first balk point. In this case, a second shift operation, the other one of the shift-up operation and the shift-down operation, is not needed for the purpose of obtaining the second balk point, whether it be either the shift-up side balk point or the shift-down side balk point.

Although the above description covers a shift operation between the first shift stage and the second shift stage, the above description can in principle be equally applied to other shift operations such as a shift operation between a second shift stage and a third shift stage.

With regard to a shift operation between the second shift stage and the third shift stage according to the embodiment of the present invention, in the same manner as described above, a set value C4 relevant to a shift-up side balk point is predetermined, while a set value C5 relevant to a shift-down side balk point is also predetermined. Both of the set values C4 and C5 are stored in the memory storage 6d of the ECU 6, but they can also be stored at a different portion. Each of the set value C4 and C5 is calculated on the basis of the design value and can be applied as a parameter for determining an actual balk point. In other words, each of the set values C4 and C5 does not always correspond to an actual balk point. Hereinafter, the following relation can be established: C4-C5=C6.

The set values C4, C5 and C6 are predetermined on the basis of the values denoted with α 1, α 2, α 3, α 4, L1, L2 and β. Experience has shown that differences in the respective set values C1, C2 and C3 among individual vehicles of an identical vehicle model are not substantial. In such an event, at least one of the following conditions should be satisfied: a first condition in which a formula: α 1 ≠ α 2 is effected, and a second condition in which a formula: α 3 ≠ α 4 is effected.

According to the embodiment of the present invention, a balk point can be obtained in accordance with the following methods 1 and 2, as non-limiting examples, in terms of a shift operation between a second shift stage and a third shift stage.

**Method 1**

The first processing unit 6m of the ECU 6 implements a process in which a shift-up side balk point D3, which appears in response to an actual shift-up operation (e.g., from a second shift stage to a third shift stage), is actually obtained. The second processing unit 6n of the ECU 6 then implements a process in which a shift-down side balk point D4' is determined as a predicted value without the need for an actual shift-down operation for the purpose of obtaining the shift-down side balk point. In detail, in this process, the shift-down side balk point D4' is determined in accordance with one of the following formulae 5 and 6 on the basis of the shift-up side balk point D3. The predicted value should be denoted with a mark ['].

$$D4' = D3 - C6 \quad \text{(Formula 5),}$$

$$D4' = D3 + C6 \quad \text{(Formula 6)}$$

The shift-down side balk point D4' is determined by formula 5 when the shift operation proceeds in a positive direction within a simulated coordinate system, and it is determined by formula 6 when the shift operation proceeds in a negative direction on a simulated coordinate system.

## Method 2

The first processing unit 6m of the ECU 6 implements a process in which a shift-down balk point D4, which appears in response to an actual shift-down operation (e.g., from the third shift stage to the second shift stage), is actually obtained. The second processing unit 6n of the ECU 6 then implements a process in which a shift-up side balk point D3' is obtained as a predicted value without the need for an actual shift-up operation for the purpose of obtaining the shift-up side balk point. In detail, in this process, the shift-up side balk point D3' is determined in accordance with one of the following formulae 7 and 8 on the basis of the shift-down side balk point D4.

$$D3' = D4 - C3 \quad \text{(Formula 7)},$$

$$D3' = D4 + C3 \quad \text{(Formula 8)}$$

The shift-up side balk point D3' is obtained by formula 7 when the shift operation proceeds in a negative direction within a simulated coordinate system, and it is obtained by formula 8 when the shift operation proceeds in a positive direction on a simulated coordinate system.

As described above, according to the embodiment of the present invention, a first balk point, one of the shift-up side balk point and the shift-down side balk point, is initially obtained by actually performing one of a shift-up operation and a shift-down operation, and a second balk point, the other one thereof, is then determined by use of the set values C4, C5 and C6, on the basis of the first balk point. In this case, a second shift operation, the other one of the shift-up operation and the shift-down operation, is not needed for the purpose of obtaining the second balk point, whether it be either the shift-up side balk point or the shift-down side balk point.

Although the above description covers a shift operation between the second shift stage and the third shift stage, the above description can in principle be equally applied to other shift operations such as a shift operation between a third shift stage and a fourth shift stage. When the apparatus is applied for a five-speed manual transmission, the above description can be applied for a shift operation between the fourth shift stage and a fifth shift stage.

As described above, according to the embodiment of the present invention, at a time that vehicles are delivered from factories, both of a shift-up side balk point and a shift-down side balk point can be determined for an abbreviated period of time, without the need for an actual shift down operation to accompany an actual shift up operation, or vice versa.

The automatic shift operation controlling apparatus for a vehicle according to the embodiment of the present invention is not limited to the configuration or structure illustrated in Figs. 1 and 2, and can be applied to other configurations or structures. For example, the steering switch 15 is not indispensable for performing the embodiment of the present invention. Moreover, the speed reduction mechanism 38 and the driving-power transmitting mechanism 33 are not limited to the structure illustrated in Fig. 2, respectively, and other structures are possible.

## Claims

1. An automatic shift operation controlling apparatus for a vehicle comprising a synchronizer ring (32) having plural synchronizer ring teeth (320) formed on an outer surface of the synchronizer ring (32) and arranged in a circumferential direction of the synchronizer ring (32), and an opposing member (47) having plural opposing teeth (470) formed on an inner surface of the opposing member (47) and arranged in a circumferential direction of the opposing member (47), the plural opposing teeth (470) engageable with the plural synchronizer ring teeth (320) at a time of a change in a gear ratio in a transmission (2), wherein a shift-up side balk point appears at a time of a shift-up operation, and a shift-down side balk point appears at a time of a shift-down operation, wherein the shift-up side balk point is different from the shift-down side balk point, **characterized in that** the apparatus comprises:

   a first processing unit (6m) configured to determine in actual practice a first balk point, which is one of the shift-up side balk point and the shift-down side balk point, by implementing the respective shift-up operation or shift-down operation; and
   a second processing unit (6n) configured to anticipate, on a basis of the first balk point, a predicted value of a second balk point which is the other of the shift-up side balk point and the shift-down side balk point.

2. The automatic shift operation controlling apparatus for a vehicle according to claim 1, wherein each of the plural synchronizer ring teeth (320) includes a first synchronizing chamfer surface (321) and a second synchronizing chamber surface (322) which face one another back to back, and each of the plural opposing member teeth (470) includes a first opposing chamfer surface (471) and a second opposing chamfer surface (472) which face one another back to back.

3. The automatic shift operation controlling apparatus for a vehicle according to claim 2, wherein an angle defined between the first synchronizing chamfer surface (321) and a central line (Pc) of each of the plural synchronizer ring teeth (320) is denoted by $\alpha 1$, an angle defined between the second synchronizing chamfer surface (322) and the central line (Pc) of the each of the plural synchronizer ring teeth (320) is denoted by $\alpha 2$, an angle defined between the first opposing chamfer surface (471) and a central line (Ps) of each of the plural sleeve teeth (470) is denoted by $\alpha 3$, and an angle defined between the second opposing chamfer surface (472) and the central line (Ps) of the each of the plural sleeve teeth (470) is denoted by $\alpha 4$, wherein at least one of a first condition, in which $\alpha 1 \neq \alpha 2$ is effected, and a second condition, in which $\alpha 3 \neq \alpha 4$ is effected, is satisfied.

4. The automatic shift operation controlling apparatus for a vehicle according to any preceding claim, wherein the predicted value of the second balk point is anticipated on the basis of the first balk point and at least one set value, the at least one set value depends on at least one dimension for designing the apparatus.

5. A method of detecting a balk point in an automatic shift operation controlling apparatus for a vehicle including an apparatus including a synchronizer ring (32) having plural synchronizer ring teeth (320) formed on an outer surface of the synchronizer ring (32) and arranged in a circumferential direction of the synchronizer ring (32), and an opposing member (47) having plural opposing member teeth (470) formed on an inner surface of the opposing member (47) and arranged in a circumferential direction of the opposing member (47), the plural opposing member teeth (470) engageable with the plural synchronizer ring teeth (320) at a time of a change in a gear ratio in the transmission (2), wherein a shift-up side balk point appears at a time of a shift-up operation, and a shift-down side balk point appears at a time of a shift-down operation, wherein the shift-up side balk point is different from the shift-down side balk point,
**characterized in that** the method comprises the steps of:

   determining in actual practice a first balk point, which is one of the shift-up side balk point and the shift-down side balk point, by performing the respective shift-up operation or shift-down operation; and
   anticipating, on a basis of the first balk point, a predicted value of a second balk point which is the other of the shift-up side balk point and the shift-down side balk point.

6. A method according to claim 5, wherein a first processing unit (6m) performs a first process for determining in actual practice the first balk point by implementing one of the shift-up operation and the shift-down operation, and a second processing unit (6n) performs a second process for anticipating the second balk point without a need for an other one of the shift-up operation and the shift-down operation.

**Patentansprüche**

1. Automatische Schaltsteuerungseinrichtung für ein Kraftfahrzeug mit einem Synchronring (32) mit mehreren an einer Außenfläche des Synchronrings (32) ausgeformten und in einer Umfangsrichtung des Synchronrings (32) angeordneten Synchronringzähnen (320) und einem gegenüberliegenden Bauteil (47) mit mehreren an einer Innenfläche des gegenüberliegenden Bauteils (47) ausgeformten und in einer Umfangsrichtung des gegenüberliegenden Bauteils (47) angeordneten gegenüberliegenden Zähnen (470), wobei zu der Zeit eines Wechsels eines Übersetzungsverhältnisses in einem Getriebe (2) die mehreren gegenüberliegenden Zähne (470) mit den mehreren Synchronringzähnen (320) in Eingriff bringbar sind, wobei ein heraufschaltseitiger Synchronpunkt zu einer Zeit eines Heraufschaltvorgangs und ein herunterschaltseitiger Synchronpunkt zu der Zeit eines Herunterschaltvorgangs auftritt, wobei der heraufschaltseitige Synchronpunkt unterschiedlich zu dem herunterschaltseitigen Synchronpunkt ist,
**dadurch gekennzeichnet, dass** die Einrichtung Folgendes aufweist:

   eine erste Verarbeitungseinheit (6m), die aufgebaut ist, um einen ersten Synchronpunkt im gegenwärtigen Gebrauch zu bestimmen, der einer von dem heraufschaltseitigen Synchronpunkt und dem herunterschaltseitigen Synchronpunkt ist, indem sie den jeweiligen Heraufschaltvorgang oder den Herunterschaltvorgang ausführt; und
   eine zweite Verarbeitungseinheit (6n), die aufgebaut ist, um auf der Basis des ersten Synchronpunkts einen Vorhersagewert eines zweiten Synchronpunkts vorherzusehen, der der andere von dem herunterschaltseitigen Synchronpunkt und dem heraufschaltseitigen Synchronpunkt ist.

2. Automatische Schaltsteuerungseinrichtung für ein Kraftfahrzeug nach Anspruch 1, wobei jeder der mehreren Synchronringzähne (320) eine erste Synchronisationsabfasungsfläche (321) und eine zweite Synchronisationsabfasungsfläche (322) aufweist, die einander Rükken an Rücken gegenüberliegen, und jeder der Zähne (470) des gegenüberliegenden Bauteils eine erste gegenüberliegende Abfasungsfläche (471) und eine zweite gegenüberliegende Abfasungsfläche (472) aufweist, die einander Rücken an Rücken gegenüberliegen.

3. Automatische Schaltsteuerungseinrichtung für ein Kraftfahrzeug nach Anspruch 2, wobei ein zwischen der ersten Synchronisationsabfasungsfläche (321) und einer Mittellinie (Pc) jedes der mehreren Synchronringzähne (320) definierter Winkel durch $\alpha 1$ **gekennzeichnet** ist, ein zwischen der zweiten Synchronisationsabfasungsfläche (322) und der Mittellinie (Pc) jedes der mehreren Synchronringzähne (320) definierter Winkel durch $\alpha 2$ **gekennzeichnet** ist, ein zwischen der ersten gegenüberliegende Abfasungsfläche (471) und einer Mittellinie (Ps) von einem jeden der mehreren Muffenzähne (470) definierter Winkel durch $\alpha 3$ **gekennzeichnet** ist und ein zwischen der zweiten gegenüberliegende Abfasungsfläche (471) und der Mittellinie (Ps) von jeden der mehreren Muffenzähne (470) definierter Winkel durch $\alpha 4$ **gekennzeichnet** ist, wobei wenigstens eine von einer ersten Bedingung, in der $\alpha 1{\neq}\alpha 2$ herbeigeführt ist, und eine zweite Bedingung, in der $\alpha 3{\neq}\alpha 4$ herbeigeführt ist, erfüllt ist.

4. Automatische Schaltsteuerungseinrichtung für ein Kraftfahrzeug nach einem vorangehenden Anspruch, wobei der Vorhersagewert des zweiten Synchronpunkts auf der Basis des ersten Synchronpunkts und wenigstens eines gesetzten Werts vorhergesehen wird, wobei der wenigstens eine gesetzte Wert von wenigstens einer Dimension zum Auslegen der Einrichtung abhängt.

5. Verfahren zum Bestimmen eines Synchronpunkts in einer automatischen Schaltsteuerungseinrichtung für ein Kraftfahrzeug mit einer Einrichtung mit einem Synchronring (32) mit mehreren an einer Außenfläche des Synchronrings (32) ausgeformten und in einer Umfangsrichtung des Synchronrings (32) angeordneten Synchronringzähnen (320) und einem gegenüberliegenden Bauteil (47) mit mehreren an einer Innenfläche des gegenüberliegenden Bauteils (47) ausgeformten und in einer Umfangsrichtung des gegenüberliegenden Bauteils (47) angeordneten gegenüberliegenden Zähnen (470), wobei zu der Zeit eines Wechsels eines Übersetzungsverhältnisses in einem Getriebe (2) die mehreren gegenüberliegenden Zähne (470) mit den mehreren Synchronringzähnen (320) in Eingriff bringbar sind, wobei ein heraufschaltseitiger Synchronpunkt zu einer Zeit eines Heraufschaltvorgangs und ein herunterschaltseitiger Synchronpunkt zu der Zeit eines Herunterschaltvorgangs auftritt, wobei der heraufschaltseitige Synchronpunkt unterschiedlich zu dem herunterschaltseitigen Synchronpunkt ist, **dadurch gekennzeichnet, dass** das Verfahren die folgenden Schritte aufweist:

Bestimmen eines ersten Synchronpunkts im gegenwärtigen Gebrauch, der einer von dem heraufschaltseitigen Synchronpunkt und dem herunterschaltseitigen Synchronpunkt ist, indem der jeweilige Heraufschaltvorgang oder Herunterschaltvorgang durchgeführt wird; und Vorhersehen eines Vorhersagewerts eines zweiten Synchronpunkts, der der andere von dem herunterschaltseitigen Synchronpunkt und dem heraufschaltseitigen Synchronpunkt ist, auf der Basis des ersten Synchronpunkts.

6. Verfahren nach Anspruch 5, wobei eine erste Verarbeitungseinheit (6m) einen ersten Prozess zum Bestimmen des ersten Synchronpunkts im gegenwärtigen Gebrauch durchführt, indem einer von dem Heraufschaltvorgang und dem Herunterschaltvorgang ausgeführt wird, und wobei eine zweite Verarbeitungseinheit (6n) einen zweiten Prozess zum Vorhersehen des zweiten Synchronpunkts ohne einem Bedarf eines anderen von dem Heraufschaltvorgang und dem Herunterschaltvorgang durchführt.

## Revendications

1. Appareil de commande d'une opération de changement de vitesse automatique pour un véhicule comprenant une bague de synchronisation (32) ayant plusieurs dents (320) de bague de synchronisation formées sur une surface externe de la bague de synchronisation (32) et disposées dans une direction circonférentielle de la bague de synchronisation (32), et un organe opposé (47) ayant plusieurs dents opposées (470) formées sur une surface interne de l'organe opposé (47) et disposées dans une direction circonférentielle de l'organe opposé (47), les plusieurs dents opposées (470) pouvant être en prise avec les plusieurs dents (320) de la bague de synchronisation au moment d'un changement dans un rapport de vitesse dans une transmission (2), où un point de synchronisation côté passage à la vitesse supérieure apparaît au moment d'une opération de passage à la vitesse supérieure, et un point de synchronisation côté rétrogradation apparaît au moment d'une opération de rétrogradation, où le point de synchronisation côté passage à la vitesse supérieure est différent du point de synchronisation côté rétrogradation, **caractérisé en ce que** l'appareil comprend :

une première unité de traitement (6m) configurée pour déterminer dans la pratique effective un premier point de synchronisation, qui est l'un du point de synchronisation côté passage à la vitesse supérieure et du point de synchronisation côté rétrogradation, en mettant en oeuvre l'opération de passage à la vitesse supérieure ou l'opération de rétrogradation respective; et une deuxième unité de traitement (6n) configurée pour anticiper, sur la base du premier point de synchronisation, une valeur prédite d'un deuxième point de synchronisation qui est l'autre du point de synchronisation côté passage à la vitesse supérieure et du point de synchronisation côté rétrogradation.

2. Appareil de commande d'une opération de changement de vitesse automatique pour un véhicule selon la revendication 1, dans lequel chacune des plusieurs dents (320) de la bague de synchronisation inclut une première surface à chanfrein de synchronisation (321) et une deuxième surface à chanfrein de synchronisation (322) qui sont l'une face à l'autre dos à dos, et chacune des plusieurs dents (470) de l'organe opposé inclut une première surface à chanfrein opposée (471) et une deuxième surface à chanfrein opposée (472) qui sont l'une face à l'autre dos à dos.

3. Appareil de commande d'une opération de changement de vitesse automatique pour un véhicule selon la revendication 2, dans lequel un angle défini entre la première surface à chanfrein de synchronisation (321) et une ligne centrale (Pc) de chacune des plusieurs dents (320) de la bague de synchronisation est représenté par $\alpha1$, un angle défini entre la deuxième surface à chanfrein de synchronisation (322) et la ligne centrale (Pc) de la chacune des plusieurs dents (320) de la bague de synchronisation est représenté par $\alpha2$, un angle défini entre la première surface à chanfrein opposée (471) et une ligne centrale (Ps) de chacune des plusieurs des dents de manchon (470) est représenté par $\alpha3$, et un angle défini entre la deuxième surface à chanfrein opposée (472) et la ligne centrale (Ps) de la chacune des plusieurs dents de manchon (470) est représenté par $\alpha4$, où au moins l'une d'une première condition, dans laquelle $\alpha1 \neq \alpha2$ est réalisée, et d'une deuxième condition, dans laquelle $\alpha3 \neq \alpha4$ est réalisée, est satisfaite.

4. Appareil de commande d'une opération de changement de vitesse automatique pour un véhicule selon l'une quelconque des revendications précédentes, dans lequel la valeur prédite du deuxième point de synchronisation est anticipée sur la base du premier point de synchronisation et d'au moins une valeur établie, la au moins une valeur établie dépend d'au moins une dimension pour la conception de l'appareil.

5. Procédé de détection d'un point de synchronisation dans un appareil de commande d'une opération de changement de vitesse automatique pour un véhicule incluant un appareil incluant une bague de synchronisation (32) ayant plusieurs dents (320) de bague de synchronisation formées sur une surface externe de la bague de synchronisation (32) et disposées dans une direction circonférentielle de la bague de synchronisation (32), et un organe opposé (47) ayant plusieurs dents opposées (470) formées sur une surface interne de l'organe opposé (47) et disposées dans une direction circonférentielle de l'organe opposé (47), les plusieurs dents (470) de l'organe opposé pouvant être en prise avec les plusieurs dents (320) de la bague de synchronisation au moment d'un changement dans un rapport de vitesse dans la transmission (2), où un point de synchronisation côté passage à la vitesse supérieure apparaît au moment d'une opération de passage à la vitesse supérieure, et un point de synchronisation côté rétrogradation apparaît au moment d'une opération de rétrogradation, où le point de synchronisation côté passage à la vitesse supérieure est différent du point de synchronisation côté rétrogradation, **caractérisé en ce que** le procédé comprend les étape consistant à :

déterminer dans la pratique effective un premier point de synchronisation, qui est l'un du point de synchronisation côté passage à la vitesse supérieure et du point de synchronisation côté rétrogradation, en exécutant l'opération de passage à la vitesse supérieure ou l'opération de rétrogradation respective; et anticiper, sur la base du premier point de synchronisation, une valeur prédite d'un deuxième point de synchronisation qui est l'autre du point de synchronisation côté passage à la vitesse supérieure et du point de synchronisation côté rétrogradation.

6. Procédé selon la revendication 5, dans lequel une première unité de traitement (6m) effectue un premier processus pour déterminer dans la pratique effective le premier point de synchronisation en mettant en oeuvre l'une de l'opération de passage à la vitesse supérieure et de l'opération de rétrogradation, et une deuxième unité de traitement (6n) effectue un deuxième processus pour anticiper le deuxième point de synchronisation sans avoir recours à une autre de l'opération de passage à la vitesse supérieure et de l'opération de rétrogradation.

# FIG. 1

# FIG. 2

# FIG. 3 A

# FIG. 3 B

# FIG. 3 C

# FIG. 4

470
472
47
Sleeve
475
Pr
β
476    471
47r    (2)
α2
L3
α3
Ps
α4
L4
470
475
470
47r    476    471
472
470    472
322    325    32
Synchronizer
ring
L2
α1    L1    Pc
321    326    320
32r
B1
472    (1)
322    325
321    326    320
322    325
320

# FIG. 5

**EP 1 584 848 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002147590 A
- EP 1205691 A1
- US 6070117 A